# EUROPÄISCHE PATENTSCHRIFT

(11) **EP 1 073 880 B1**
(45) Veröffentlichungstag und Bekanntmachung des Hinweises auf die Patenterteilung: **20.03.2002**
(21) Anmeldenummer: 99924768.7
(22) Anmeldetag: 01.04.1999
(51) Int. Cl.: G01D 3/00, F02D 41/14, G01M 15/00

(54) **EINRICHTUNG ZUM RATIOMETRISCHEN MESSEN VON SENSORSIGNALEN**
DEVICE FOR RADIOMETRIC SENSOR SIGNAL MEASUREMENT
DISPOSITIF DE MESURE RADIOMETRIQUE DE SIGNAUX EMIS PAR DES DETECTEURS

(30) Priorität: 23.04.1998 DE 19818315
(43) Veröffentlichungstag der Anmeldung: 07.02.2001
(73) Patentinhaber: SIEMENS AKTIENGESELLSCHAFT, 80333 München (DE)
(72) Erfinder: BOLZ, Stephan, D-93102 Pfatter (DE)
(86) Internationale Anmeldenummer: DE9901018
(87) Internationale Veröffentlichungsnummer: WO9956084

(56) Entgegenhaltungen:
- WO-A1-92/00504
- DE-A1- 4 404 999
- DE-C- 19 636 838
- US-A- 5 408 143

## Beschreibung

Die Erfindung betrifft eine Einrichtung zum ratiometrischen Messen von Sensorsignalen, insbesondere in der Kraftfahrzeugelektronik, nach dem Oberbegriff von Anspruch 1.

Kraftfahrzeug-Brennkraftmaschinen werden zunehmend mit elektronischem Fahrpedal (E-Gas) und elektronischer Traktionskontrolle (ETC) ausgerüstet. Zur Positionsbestimmung von Fahrpedal, Drosselklappe, Luftmassenmesser etc. werden beispielsweise mit einer Referenzspannung beaufschlagte Potentiometer als Pedalwertgeber, Drosselklappengeber, Luftmassengeber etc. verwendet; die Verhältnisse der an deren Abgriffen meßbaren Spannungen zur Referenzspannung sind ein Maß für die jeweilige Position des zugeordneten Gebers.

Aus DE 196 29 747 A1 ist eine mit einer ersten Referenzspannung beaufschlagte Sensoreinrichtung bekannt, die ein ratiometrisches Meßsignal erzeugt; es wird das Verhältnis der ersten und einer zweiten Referenzspannung gebildet, mit welchem das Meßsignal korrigiert wird.

Aus Gründen der Betriebssicherheit sind derartige Geber meistens mehrfach ausgeführt und werden aus voneinander unabhängigen Spannungsquellen versorgt.

Die Anforderungen an die Meßgenauigkeit von Sensoren in der Kraftfahrzeugelektronik werden immer höher. Viele Meßwerte werden als analoge Gleichspannungen Vmeß (0...5V ö 0...100%) von den Sensoren zu einem verarbeitenden Mikrocontroller µC übertragen. Dort werden sie mittels eines Analog/Digital-Konverters ADC digitalisiert (z.B. 10Bit-ADC: 0...5V ö 0...1023 Schritte). Bei einem Analog/Digital-Konverter wird die zu wandelnde Meßspannung Vmeß in Bezug zu einer Referenzspannung gesetzt. Für eine möglichst genaue Umwandlung der Analogwerte in Digitalwerte ist es deshalb wünschenswert, daß die Sensoren und der Analog/Digital-Konverter ADC die gleiche Referenzspannung verwenden.

In der Kraftfahrzeugelektronik ist dies in der Regel nicht möglich, da als Referenzspannung für den im Mikrocontroller µC integrierten Analog/Digital-Konverter ADC die Versorgungsspannung V5int des Mikrocontrollers µC verwendet wird (VAref = V5int). Da aber im Falle eines Kurzschlusses beispielsweise einer Sensorleitung nach Masse oder Batterie der Mikrocontroller und damit das Motor-/Getriebe-Steuergerät betriebsfähig bleiben muß, darf die Versorgungsspannung V5int des Mikrocontrollers µC nicht auf den Fahrzeug-Kabelbaum geführt werden. Es werden deshalb voneinander unabhängige Versorgungs- und Referenzspannungen benötigt.

Eine Hauptursache für Meßfehler liegt im Gleichlauf der einzelnen Versorgungs- und Referenzspannungen. Für ein einen Mikrocontroller µC enthaltendes Motorsteuergerät ST werden bei zweifach ausgeführten Gebern beispielsweise folgende Spannungen benötigt:
- eine interne Versorgungsspannung V5int für den Mikrocontroller µC, die zugleich Referenzspannung für einen in diesen integrierten Analog/Digital-Konverter ADC ist, der für ratiometrische Messungen der Geberspannungen und deren Umwandlung in für die Weiterverarbeitung erforderliche Digitalwerte benötigt wird,
- eine Referenzspannung V5a für den ersten Gebersatz SS1 (Pedalwertgeber 1, Drosselklappengeber 1, Luftmassengeber 1 etc.), und
- eine Referenzspannung V5b für den zweiten Gebersatz SS2 (Pedalwertgeber 2, Drosselklappengeber 2, Luftmassengeber 2 etc.).
Die Bezeichnung V5int bedeutet dabei die interne 5Volt-Versorgungsspannung des Mikrocontrollers µC, V5a bzw. V5b hingegen die 5Volt- Referenzspannungen für extern vom Motorsteuergerät ST angeordnete Sensoren. Die Versorgungsspannung für Mikrocontroller und Sensoren beträgt üblicherweise 5V.

Die Spannungen V5int, V5a und V5b müssen, wie bereits gesagt, voneinander unabhängig sein, d.h., bei Kurzschluß einer dieser Spannungen dürfen die anderen Spannungen nicht beeinträchtigt werden.

Außerdem muß die Versorgungsspannung V5int und damit der Arbeitsbereich des Mikrocontrollers µC überwacht werden. Liegt sie außerhalb des vorgeschriebenen Arbeitsbereichs von beispielsweise V5int = 5V ± 250mV, ist eine sichere Funktion der Motorsteuerung nicht mehr gewährleistet. Eine daraufhin mögliche unkontrollierte Arbeitsweise des Mikrocontrollers µC und damit des Motorsteuergeräts ST kann bis zu Personenschäden führen und ist unbedingt zu vermeiden. Der Mikrocontroller µC muß in diesem Fall angehalten werden.

Ein optimaler Gleichlauf wäre durch Integration aller Spannungsquellen in einen integrierten Spannungsregler mit gemeinsamer Referenzspannungsquelle möglich; dem steht aber entgegen, daß bei einem Fehler in dieser gemeinsamen Referenzspannungsquelle (beispielsweise durch fehlerhaften Aufbau oder durch Störimpulse) keine zuverlässige Spannungsüberwachung möglich ist, da ein solcher Fehler vom Mikrocontroller µC nicht erkannt werden kann.

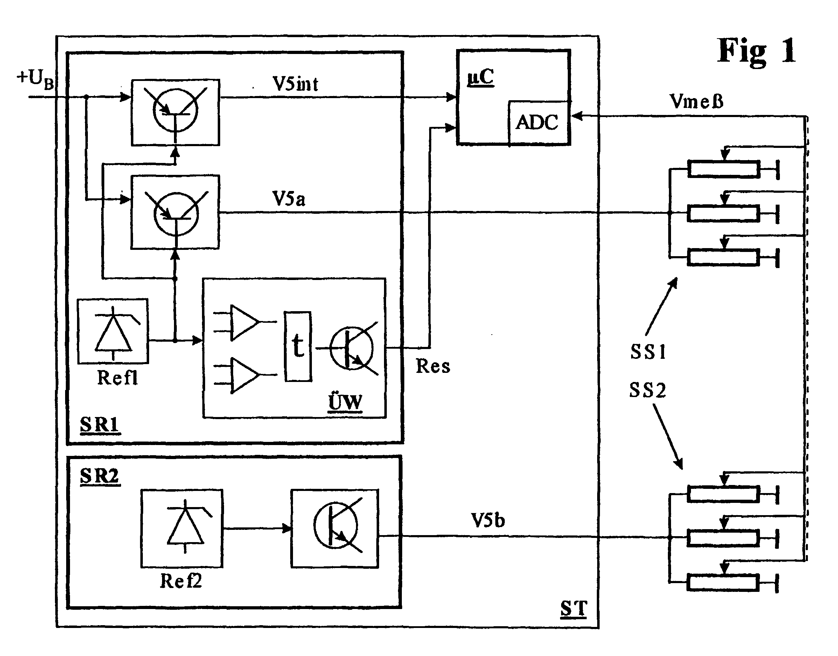

Eine ausgeführte Kompromißlösung besteht, wie in Figur 1 dargestellt, darin, daß ein an sich bekannter, erster Spannungsregler SR1 die interne Versorgungsspannung V5int und die externe Referenzspannung V5a mittels einer gemeinsamen, aus einer Betriebsspannung U_{B} gewonnenen Referenzspannung Ref1, die von einer im Spannungsregler SR integrierten Überwachungsschaltung ÜW überwacht wird, erzeugt, und daß ein zweiter, kleinerer Spannungsregler SR2 mit eigener Referenzspannungsquelle Ref2 die externe Referenzspannung V5b erzeugt. Die als Kasten innerhalb des Spannungsreglers SR dargestellte Überwachungsschaltung ÜW weist einen durch zwei Operationsverstärkersymbole angedeuteten Fensterkomparator auf, dessen Ausgangssignal, gegebenenfalls über ein Zeitglied τ verzögert, als Resetsignal Res1 an den Mikrocontroller µC ausgegeben wird, wenn vorgegebene Grenzwerte von der Spannungsreferenz über- oder unterschritten werden.

Das Zeitglied τ soll ermöglichen, daß ein Resetsignal erst dann ausgegeben wird, wenn die Spannungsreferenz die Grenzwerte für eine bestimmte Zeit über- oder unterschreitet.

Man erhält mit dieser Ausführung einen guten Gleichlauf der internen Versorgungsspannung V5int mit der externen Referenzspannung V5a, verliert aber den Gleichlauf zur Referenzspannung V5b. Auch ist bei einem Fehler in dieser gemeinsamen Spannungsreferenz Ref1 keine zuverlässige Spannungsüberwachung möglich, da die Grenzwerte in der Überwachungsschaltung ÜW von der Spannungsreferenz Ref1 abgeleitet werden und dann ebenfalls fehlerhaft sind.

Es ist Aufgabe der Erfindung, eine Einrichtung zu schaffen, welche einen guten Gleichlauf aller erzeugten Spannungen ermöglicht und eine zuverlässige Spannungsüberwachung der Versorgungs- und Referenzspannungen gewährleistet.

Diese Aufgabe wird erfindungsgemäß durch eine Einrichtung gemäß den Merkmalen des Anspruchs 1 gelöst.

Ein Ausführungsbeispiel nach der Erfindung wird nachstehend anhand einer schematischen Zeichnung näher erläutert. In der Zeichnung zeigen:
- Figur 1:: eine bereits ausgeführte Kompromißlösung einer Einrichtung, und
- Figur 2:: eine erfindungsgemäße Einrichtung.

Bei der Kompromißlösung nach Figur 1 sind die beiden bereits erwähnten Spannungsregler SR1 und SR2 sowie der Mikrocontroller µC innerhalb eines als Kasten angedeuteten Motorsteuergeräts ST angeordnet, während die zweifach ausgeführten Potentiometersätze SS1 und SS2 mit beispielsweise je einem Pedalwertgeber, Drosselklappengeber und Luftmassengeber außerhalb desselben angeordnet sind.

Die interne Versorgungsspannung V5int für den Mikrocontroller µC und die externe Referenzspannung V5a für den ersten Potentiometersatz SS1 werden über eine gemeinsame Spannungsreferenz Ref1, die von einer Überwachungsschaltung ÜW überwacht wird, im ersten Spannungsregler SR1 erzeugt, während die externe Referenzspannung V5b für den zweiten Potentiometersatz SS2 über eine eigene Referenzspannung Ref2 im zweiten Spannungsregler SR2 erzeugt wird.

Mit dieser Lösung erhält man zwar einen guten Gleichlauf der internen Versorgungsspannung V5int mit der externen Referenzspannung V5a; nachteilig daran ist aber, daß der Gleichlauf zur Referenzspannung V5b verlorengeht und daß bei einem Fehler in der gemeinsamen Spannungsreferenz Ref1 keine zuverlässige Spannungsüberwachung möglich ist.

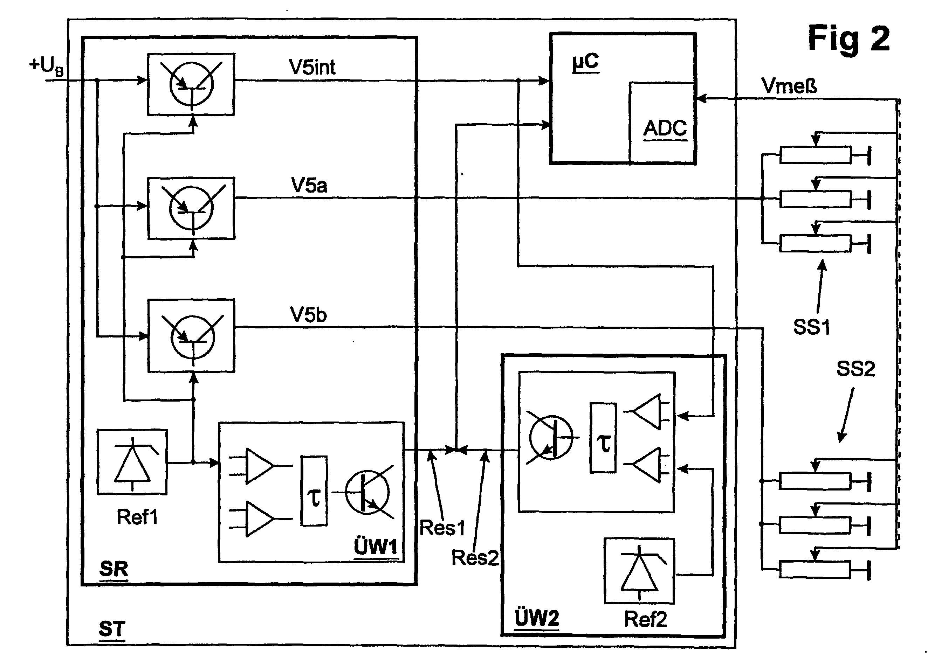

Die erfindungsgemäße Lösung ist in Figur 2 dargestellt. Das Motorsteuergerät ST enthält einen mit der Betriebsspannung U_{B} versorgten Spannungsregler SR mit drei voneinander unabhängigen Ausgängen, an welchen die interne Versorgungsspannung V5int und die beiden externen Referenzspannungen V5a und V5b anliegen, die über eine gemeinsame, von der Betriebsspannung U_{B} abgeleitete Spannungsreferenz Ref1 geregelt werden und damit einen guten Gleichlauf aufweisen. Die Spannungsreferenz Ref1 wird mittels einer Überwachungsschaltung ÜW1 überwacht. Diese gibt ein Resetsignal Res1 an den Mikrocontroller µC ab, sobald die Spannungsreferenz Ref1 vorgegebene Grenzwerte über- oder unterschreitet.

Bei einem Fehler in der gemeinsamen Spannungsreferenz Ref1 wäre aber auch hier keine zuverlässige Spannungsüberwachung möglich. Aus diesem Grund ist eine zweite Überwachungsschaltung ÜW2 mit einer eigenen, aus der Betriebsspannung U_{B} abgeleiteten, aber von der Spannungsreferenz Ref1 unabhängigen Spannungsreferenz Ref2 vorgesehen, welche eine der Ausgangsspannungen des Spannungsreglers SR, vorzugsweise die interne Versorgungsspannung V5int des Mikrocontrollers µC, überwacht und ihrerseits ein Resetsignal Res2 an den Mikrocontroller µC abgibt, sobald die interne Versorgungsspannung V5int vorgegebene Grenzwerte über- oder unterschreitet.

Diese Lösung erfüllt ohne Kompromisse alle Forderungen hinsichtlich Gleichlauf der Spannungen, Unabhängigkeit der Ausgänge und sicherer Spannungskontrolle. Sie ist auch kostengünstig. Der Bedarf an Siliziumfläche dieser Schaltung ist minimal im Vergleich zu der Lösung nach Figur 1 mit einem zweiten Spannungsregler SR2.

Da bei integrierten Schaltungen mit so kleiner Siliziumfläche im wesentlichen die Gehäusekosten den Preis bestimmen, ist es vorteilhaft, die zweite Überwachungsschaltung ÜW2 anstelle einer "stand alone"-Lösung in einen anderen, im Motorsteuergerät ST befindlichen integrierten Schaltkreis zu integrieren, beispielsweise in den Mikrocontroller µC.

Die Erfindung ist auch bei Kraftfahrzeug-Brennkraftmaschinen ohne elektronisches Fahrpedal (E-Gas) einsetzbar, welche nur einen Drosselklappengeber und einen Luftmassenmesser aufweisen. Durch die Bereitstellung zweier unabhängiger externer Referenzspannungen V5a und V5b können Drosselklappengeber und Luftmassenmesser unabhängig voneinander versorgt werden. Bei Ausfall eines dieser beiden Geber ist dann immer noch ein Notlauf möglich, wodurch ein Liegenbleiben des Fahrzeugs vermieden werden kann.

## Patentansprüche

1. Einrichtung zum ratiometrischen Messen von Sensorsignalen, insbesondere bei Motorsteuergeräten von Kraftfahrzeug-Brennkraftmaschinen, mit wenigstens einem Sensor oder Sensorsatz (SS1, SS2), dessen analoge Ausgangssignale (Vmeß) einem in einen Mikrocontroller (µC) untegrierten Analog/Digital-Konverter (ADC) zugeführt sind, mit einem Spannungsregler (SR), welcher eine Versorgungsspannung (V5int) für den Mikrocontroller (µC) und unabhängig davon eine Referenzspannung (V5a, V5b) für jeden Sensor oder Sensorsatz (SS1, SS2) bereitstellt, wobei die Spannungen (V5int, V5a, V5b) von einer aus einer Betriebsspannung (U_{B}) gewonnenen, ersten Spannungsreferenz (Ref1) abgeleitet sind, und
mit einer Überwachungsschaltung (ÜW1), welche den Mikrocontroller (µC) durch ein erstes Resetsignal (Res1) anhält, wenn die Spannungsreferenz (Ref1) einen vorgegebenen, ersten Spannungsbereich verläßt,
**dadurch gekennzeichnet,**
**daß** eine zweite Überwachungsschaltung (ÜW2) mit einer von der ersten Spannungsreferenz (Ref1) unabhängigen, aus der Betriebsspannung (U_{B}) gewonnenen, zweiten Spannungsreferenz (Ref2) vorgesehen ist, welche den Mikrocontroller (µC) durch ein zweites Resetsignal (Res2) anhält, wenn eine vom Spannungsregler (SR) erzeugte Spannung (V5int, V5a, V5b) einen vorgegebenen, zweiten Spannungsbereich verläßt.

2. Einrichtung nach Anspruch 1, **dadurch gekennzeichnet, daß** die zweite Überwachungsschaltung (ÜW2) in einen vorhandenen integrierten Schaltkreis (µC) integriert ist.

## Claims

1. Device for the ratiometric measurement of sensor signals, particularly in engine control units in motor vehicle internal combustion engines, having at least one sensor or sensor set (SS1, SS2) whose analog output signals (Vmeβ) are supplied to an analog/digital converter (ADC) integrated in a microcontroller (µC), having a voltage controller (SR) which provides a supply voltage (V5int) for the microcontroller (µC) and, independently of this, a reference voltage (V5a, V5b) for each sensor or sensor set (SS1, SS2), the voltages (V5int, V5a, V5b) being derived from a first voltage reference (Ref1), which is obtained from an operating voltage (U_{B}), and
having a monitoring circuit (ÜW1) which stops the microcontroller (µC) by means of a first reset signal (Res1) if the voltage reference (Ref1) leaves a prescribed, first voltage range,
**characterized**
**in that** there is a second monitoring circuit (ÜW2) having a second voltage reference (Ref2) which is independent of the first voltage reference (Ref1) and is obtained from the operating voltage (U_{B}), said second monitoring circuit stopping the microcontroller (µC) by means of a second reset signal (Res2) if a voltage (V5int, V5a, V5b) generated by the voltage controller (SR) leaves a prescribed, second voltage range.

2. Device according to Claim 1, **characterized in that** the second monitoring circuit (ÜW2) is integrated in an integrated circuit (µC) which is present.

## Revendications

1. Dispositif de mesure radiométrique de signaux émis par des détecteurs, en particulier dans des dispositifs de commande de moteurs pour moteurs à combustion interne pour véhicules automobiles, comprenant au moins un détecteur ou un groupe de détecteurs (SS1, SS2) dont les signaux analogiques de sortie (Vmes) sont envoyés à un convertisseur analogique-numérique (ADC) intégré dans un microcontrôleur (µC),
un régulateur de tension (SR) mettant à disposition une tension d'alimentation (V5int) destinée au microcontrôleur (µC) et, indépendamment de celle-ci, une tension de référence (V5a, V5b) destinée à chaque détecteur ou groupe de détecteurs (SS1, SS2), les tensions (V5int, V5a, V5b) étant dérivées d'une première référence de tension (Ref1) elle-même dérivée d'une tension de service (U_{B}) et
un montage de contrôle (ÜW1) qui arrête le microcontrôleur (µC) par un premier signal de mise à zéro (Res1) lorsque la référence de tension (Ref1) quitte une première plage de tension prescrite,
**caractérisé en ce que**
est prévu un second montage de contrôle (ÜW2) présentant une seconde référence de tension (Ref2), dérivée d'une tension de service (U_{B}) et indépendante de la première référence de tension (Ref1), et arrêtant le microcontrôleur (µC) par un second signal de mise à zéro (Res2) lorsqu'une tension (V5int, V5a, V5b) générée par un régulateur de tension (SR) quitte une seconde plage de tension prescrite.

2. Dispositif selon la revendication 1, **caractérisé en ce que** le second montage de contrôle (ÜW2) est intégré dans un circuit (µC) intégré existant.
